# FASCICULE DE BREVET EUROPEEN

(11) **EP 3 487 923 B1**
(45) Date de publication et mention de la délivrance du brevet: **28.06.2023**
(21) Numéro de dépôt: 17754392.3
(22) Date de dépôt: 20.07.2017
(51) Int. Cl.: C08L 9/00, C08L 7/00, C08L 61/06, C08L 61/12, C08G 8/04, B60C 1/00

(54) **COMPOSITION DE CAOUTCHOUC À HAUTE RIGIDITÉ**
HOCHFESTE KAUTSCHUKZUSAMMENSETZUNG
HIGH STRENGTH RUBBER COMPOSITION

(30) Priorité: 21.07.2016 FR 1656967
(43) Date de publication de la demande: 29.05.2019
(73) Titulaire: Compagnie Générale des Etablissements Michelin, 63000 Clermont-Ferrand (FR)
(72) Inventeur: GAVARD-LONCHAY, Odile, 63040 Clermont-Ferrand Cedex 9 (FR); THUILLIEZ, Anne-Lise, 63040 Clermont-Ferrand Cedex 9 (FR)
(74) Mandataire: Louret, Sylvain
(86) Numéro de dépôt international: PCT/FR2017/051990
(87) Numéro de publication internationale: WO 2018/015675

(56) Documents cités:
- WO-A1-2015/007641
- US-A- 2 776 948

## Description

L'invention concerne une composition de caoutchouc, un procédé de fabrication de cette composition, un composite de caoutchouc et un pneumatique.

Il est connu d'utiliser dans certaines parties des pneumatiques, des compositions de caoutchouc présentant une forte rigidité lors de faibles déformations du pneumatique. La résistance aux faibles déformations est une des propriétés que doit présenter un pneumatique pour répondre aux sollicitations auxquelles il est soumis.

Une forte rigidité peut être obtenue en utilisant un système de vulcanisation dit concentré, c'est-à-dire comprenant notamment des taux de soufre et d'accélérateur de vulcanisation relativement élevés.

Toutefois, un tel système de vulcanisation concentré pénalise le vieillissement à cru de la composition. Ainsi, lorsque la composition est sous forme de produit semi-fini, par exemple de bande de gomme, le soufre peut migrer en surface du produit semi-fini. Ce phénomène, appelé effleurissement, entraine une pénalisation du collant à cru du produit semi-fini lors de son stockage prolongé, avec pour conséquence une dégradation de l'adhésion entre les produits semi-finis lors de la fabrication du pneumatique.

Par ailleurs, le stockage de la composition crue contenant un système de vulcanisation concentré est susceptible d'entrainer une diminution de la phase retard de la composition lors de sa vulcanisation, c'est-à-dire le temps précédant le début de la vulcanisation. En conséquence, la composition peut commencer à cuire prématurément dans certains outils de mise en forme et la cinétique de vulcanisation est susceptible d'être modifiée et le rendement de vulcanisation d'être dégradé.

Un tel système de vulcanisation concentré pénalise également le vieillissement à cuit. En effet, on observe une dégradation des propriétés mécaniques de la composition cuite, notamment aux limites, par exemple de l'allongement à rupture.

Une forte rigidité peut autrement être obtenue en augmentant le taux de charge renforçante.

Toutefois, de manière connue, l'augmentation de la rigidité d'une composition de caoutchouc en augmentant le taux de charge peut pénaliser les propriétés d'hystérèse et donc de résistance au roulement des pneumatiques. Or, on cherche toujours à baisser la résistance au roulement des pneumatiques pour diminuer la consommation en carburant et ainsi préserver l'environnement.

Enfin, une rigidité élevée peut être obtenue en incorporant certaines résines renforçantes comme divulgué dans WO 02/10269.

Classiquement l'augmentation de la rigidité est obtenue en incorporant des résines renforçantes à base d'un système accepteur/donneur de méthylène. Les termes « accepteur de méthylène » et « donneur de méthylène » sont bien connus de l'homme du métier et largement utilisés pour designer des composés aptes à réagir ensemble pour générer par condensation une résine renforçante tridimensionnelle qui vient se superposer et s'interpénétrer avec le réseau charge renforçante/élastomère d'une part et, avec le réseau élastomère/soufre d'autre part (si l'agent de réticulation est le soufre). A l'accepteur de méthylène est associé un agent durcisseur, apte à le réticuler ou le durcir, encore appelé communément "donneur de méthylène". Des exemples de tels accepteur et donneur de méthylène sont décrits dans WO 02/10269.

Les donneurs de méthylène classiquement utilisés dans les compositions de caoutchouc pour pneumatiques sont l'hexa-méthylènetétramine (en abrégé HMT), ou l'hexamethoxyméthylmélamine (en abrégé HMMM ou H3M), ou l'hexaethoxyméthylmélamine.

Les accepteurs de méthylène classiquement utilisés dans les compositions de caoutchouc pour pneumatiques sont des résines phénoliques précondensées.

Toutefois, la combinaison de résine phénolique classiquement utilisée en tant qu'accepteur de méthylène avec l'HMT ou l'H3M en tant que donneur de méthylène, produit du formaldéhyde au cours de la vulcanisation de la composition de caoutchouc. Or, il est souhaitable de diminuer, voire de supprimer à terme le formaldéhyde des compositions de caoutchouc en raison de l'impact environnemental de ces composés et de l'évolution récente de la réglementation, notamment la règlementation européenne, sur ce type de composé.

L'invention a pour objet une composition de caoutchouc rigidifiée au moyen de composés à faible impact environnemental.

A cet effet, l'invention a pour objet une composition de caoutchouc comprenant une matrice d'élastomère ou de caoutchouc dans laquelle est dispersé au moins un autre composant, caractérisé en ce qu'elle comprend au moins une résine à base:
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un composé phénolique choisi parmi :
   - A21) au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées
   - A22) au moins un monophénol aromatique comprenant au moins un noyau aromatique à six chainons portant une unique fonction hydroxyle,
      ∘ les deux positions ortho de la fonction hydroxyle étant non substituées ou
      ∘ au moins une position ortho et la position para de la fonction hydroxyle étant non substituées,
et leurs mélanges.

De manière inattendue, les Demanderesses ont découvert lors de leurs recherches que les composés aromatiques A1 de la composition selon l'invention permettent d'éviter la production de formaldéhyde contrairement aux donneurs de méthylène classiques. Les Demanderesses ont découvert lors de leurs recherches qu'un composé aromatique comprenant au moins deux fonctions, dont au moins une fonction hydroxyméthyle, pouvait, avec un composé phénolique, former une résine alternative aux résines renforçantes à base d'un système accepteur/donneur de méthylène.

En outre, la combinaison spécifique des composés aromatiques A1 et des composés phénoliques A2 de la composition selon l'invention permet d'obtenir des compositions de caoutchouc présentant une rigidité à basse déformation équivalente voire largement améliorée par rapport aux compositions de caoutchouc classiques qui comprennent des donneurs de méthylène HMT ou H3M et supérieure par rapport à une composition de caoutchouc dépourvue de résine renforçante.

De plus, la combinaison spécifique des composés aromatiques A1 et des composés phénoliques A2 de la composition selon l'invention permet de concevoir des compositions de caoutchouc présentant un maintien de rigidité satisfaisant avec l'augmentation de la température, en tous cas meilleur qu'une composition de caoutchouc dépourvue de résine renforçante.

Par l'expression « résine à base de », il faut bien entendu comprendre une résine comportant le mélange et/ou le produit de la réaction entre les différents constituants de base utilisés pour la condensation finale de cette résine, de préférence uniquement le produit de la réaction entre les différents constituants de base utilisés pour cette résine, certains d'entre eux pouvant être destinés à réagir ou susceptibles de réagir entre eux ou avec leur environnement chimique proche, au moins en partie, lors des différentes phases du procédé de fabrication de la composition, des composites ou du pneumatique, en particulier au cours d'une étape de cuisson. Ainsi les constituants de base sont les réactifs destinés à réagir ensemble lors de la condensation finale de la résine et ne sont pas des réactifs destinés à réagir ensemble pour former ces constituants de base.

Conformément à l'invention, les constituants de base comprennent donc au moins un composé aromatique A1 et au moins un composé phénolique A2. Dans un mode de réalisation, les constituants de base peuvent comprendre d'autres constituants additionnels différents du composé aromatique A1 et du composé phénolique A2. Dans un autre mode de réalisation, les constituants de base sont constitués d'au moins un composé aromatique A1 et d'au moins un composé phénolique A2.

De préférence, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexa-méthylènetétramine (HMT), l'hexamethoxyméthylmélamine (H3M), l'hexaethoxyméthylmélamine, le chlorure de lauryloxyméthylpyridinium, le chlorure d'éthoxyméthylpyridinium, des polymères d'hexaméthoxyméthylmélamine de trioxanne de formaldéhyde, l'hexakis(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N,N',N"-tris(méthoxyméthyl)mélamine, la N,N',N"-tributyl-N,N',N"-triméthylolmélamine. Plus avantageusement, ces autres constituants additionnels sont dépourvus de formaldéhyde et dépourvus des donneurs de méthylène décrits dans ce paragraphe.

Plus préférentiellement, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexaméthylènetétramine, l'hexaéthoxyméthylmélamine, l'hexaméthoxyméthylmélamine, le chlorure de lauryloxyméthylpyridinium, le chlorure d'éthoxyméthylpyridinium, l'hexaméthoxyméthylmélamine de trioxanne et les oxyméthylmélamines N-substituées répondant à la formule générale: 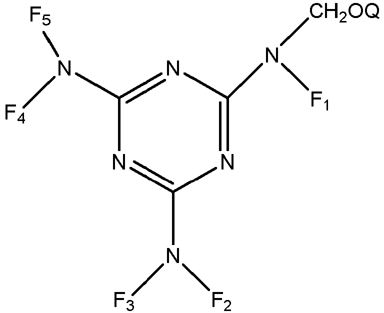 dans laquelle Q représente un groupe alkyle contenant de 1 à 8 atomes de carbone; F₁, F₂, F₃, F₄ et F₅ sont choisis, indépendamment l'un de l'autre, parmi le groupe constitué par un atome d'hydrogène, par un groupe alkyle contenant de 1 à 8 atomes de carbone, par le groupe -CH2OQ et leurs produits de condensation. Plus avantageusement, ces autres constituants additionnels sont dépourvus de formaldéhyde et dépourvus des donneurs de méthylène décrits dans ce paragraphe.

Encore plus préférentiellement, dans le mode de réalisation où les constituants de base comprennent d'autres constituants additionnels, ces autres constituants additionnels sont dépourvus de formaldéhyde et/ou dépourvus de donneur de méthylène. Plus avantageusement, ces autres constituants additionnels sont dépourvus de formaldéhyde et dépourvus des donneurs de méthylène.

Par dépourvu de formaldéhyde ou dépourvu de donneur de méthylène, on entend que le taux massique total du formaldéhyde ou du ou des donneurs de méthylène appartenant aux groupes décrits ci-dessus en poids total du ou des composés aromatiques A1 dans les constituants de base est inférieur ou égal à 10%, de préférence à 5%, plus préférentiellement à 2% et encore plus préférentiellement à 1%.

Par dépourvu de formaldéhyde et dépourvu de donneur de méthylène, on entend que le taux massique total du formaldéhyde et du ou des donneurs de méthylène appartenant aux groupes décrits ci-dessus en poids total du ou des composés aromatiques A1 dans les constituants de base est inférieur ou égal à 10%, de préférence à 5%, plus préférentiellement à 2% et encore plus préférentiellement à 1%.

Par "position méta l'une par rapport à l'autre", on entendra que les fonctions visées, par exemple les fonctions hydroxyle dans le polyphénol aromatique, sont portées par des carbones du noyau aromatique séparés l'un de l'autre par un unique autre carbone du noyau aromatique.

Par "position para l'une par rapport à l'autre", on entendra que les fonctions visées sont à l'opposées l'une de l'autre, c'est-à-dire en positions 1 et 4 du noyau aromatique à 6 chaînons. De façon analogue, "la position para" par rapport à une fonction est une position opposée à la fonction sur le noyau aromatique à 6 chaînons portant la fonction.

Par "en position ortho d'une fonction", on entendra la position occupée par le carbone du noyau aromatique immédiatement adjacent au carbone du noyau aromatique portant la fonction. De façon analogue, "la position ortho" par rapport à une fonction est la position adjacente à la fonction sur le noyau aromatique portant la fonction.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

« CHO » représente la fonction aldéhyde.

« CH₂OH » représente la fonction hydroxyméthyle.

Le « composé A1 » désigne, dans le cadre de l'invention, le composé aromatique défini au paragraphe 1.1.

Le « composé A2 » désigne, dans le cadre de l'invention, le composé A21 et/ou le composé A22.

Le « composé A21 » désigne, dans le cadre de l'invention, le polyphénol aromatique défini au paragraphe I.2.

Par « polyphénol aromatique » on entend un composé aromatique comprenant au moins un noyau benzénique porteur de plus d'une fonction hydroxyle.

Le « composé A22 » désigne, dans le cadre de l'invention, le monophénol aromatique défini au paragraphe I.2.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

La composition de caoutchouc comprend donc au moins une (c'est-à-dire une ou plusieurs) résine renforçante réticulée, cette résine renforçante étant constituée par la résine selon l'invention; cette résine étant à base d'au moins un (c'est-à-dire un ou plusieurs) composé aromatique A1 et au moins un (c'est-à-dire un ou plusieurs) composé phénolique A2, constituants qui vont être décrits en détail ci-après.

L'invention a également pour objet une composition de caoutchouc comprenant une matrice d'élastomère ou de caoutchouc dans laquelle est dispersé au moins un autre composant, caractérisé en ce qu'elle comprend
A1) au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un composé phénolique choisi parmi :
   - A21) au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées ;
   - A22) au moins un monophénol aromatique comprenant au moins un noyau aromatique à six chainons portant une unique fonction hydroxyle,
      - les deux positions ortho de la fonction hydroxyle étant non substituées, ou
      - au moins une position ortho et la position para de la fonction hydroxyle étant non substituées ;

   - et leurs mélanges.

Un autre objet de l'invention est un procédé de fabrication d'une composition de caoutchouc à l'état cru, comprenant une matrice d'élastomère ou de caoutchouc dans laquelle est dispersé au moins un autre composant, caractérisé en ce qu'il comprend une étape de mélangeage
- A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
- A2) d'au moins un composé phénolique choisi parmi
   - A21) au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées
   - A22) au moins un monophénol aromatique comprenant au moins un noyau aromatique à six chainons portant une unique fonction hydroxyle,
      ∘ les deux positions ortho de la fonction hydroxyle étant non substituées ou
      ∘ au moins une position ortho et la position para de la fonction hydroxyle étant non substituées,
         - leurs mélanges ; et
         - d'au moins un élastomère.

Un autre objet de l'invention est un procédé de fabrication d'une composition de caoutchouc à l'état cuit, comprenant :
- une étape de fabrication d'une composition de caoutchouc à l'état cru comprenant une matrice d'élastomère ou de caoutchouc dans laquelle est dispersé au moins un autre composant, caractérisé en ce qu'il comprend une étape de mélangeage: - A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
- A2) d'au moins un composé phénolique choisi parmi
   - A21) au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées
   - A22) au moins un monophénol aromatique comprenant au moins un noyau aromatique à six chainons portant une unique fonction hydroxyle,
      ∘ les deux positions ortho de la fonction hydroxyle étant non substituées ou
      ∘ au moins une position ortho et la position para de la fonction hydroxyle étant non substituées,
et leurs mélanges,
- puis, une étape de mise en forme de la composition de caoutchouc à l'état cru,
- puis, une étape de réticulation, par exemple par vulcanisation ou cuisson, de la composition de caoutchouc durant laquelle on réticule une résine à base du composé phénolique A2 et du composé aromatique A1.

De préférence, durant l'étape de mélangeage, on mélange également au moins un élastomère à la composition.

Encore un autre objet de l'invention est une composition de caoutchouc susceptible d'être obtenue par un procédé tel que décrit ci-dessus.

L'invention a aussi pour objet un composite de caoutchouc renforcé d'au moins un élément de renfort noyé dans une composition de caoutchouc telle que décrite ci-dessus.

Un autre objet de l'invention est un pneumatique comprenant une composition de caoutchouc telle que décrite ci-dessus ou un composite de caoutchouc tel que décrit ci-dessus.

Par composition de caoutchouc, on entend que la composition comprend au moins un élastomère ou un caoutchouc (les deux termes étant synonymes) et au moins un autre composant. Une composition de caoutchouc comprend donc une matrice d'élastomère ou de caoutchouc dans laquelle est dispersé au moins l'autre composant. Une composition de caoutchouc est dans un état plastique à l'état cru (non-réticulé) et dans un état élastique à l'état cuit (réticulé) mais en aucun cas dans un état liquide. Une composition de caoutchouc ne doit pas être confondue avec un latex d'élastomère qui est une composition dans un état liquide comprenant un solvant liquide, généralement de l'eau, et au moins un élastomère ou un caoutchouc dispersé dans le solvant liquide de façon à former une émulsion. Ainsi, la composition de caoutchouc n'est pas une composition adhésive aqueuse.

Dans la présente description, sauf indication expresse différente, tous les pourcentages (%) indiqués sont des pourcentages en poids. Le sigle « pce » signifie parties en poids pour cent parties d'élastomère.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

### 1.1 - Composé aromatique A1 de la composition de caoutchouc

Le premier constituant essentiel de la résine est un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle. Ainsi, conformément à l'invention, c'est ledit noyau aromatique qui est porteur des fonctions hydroxyméthyle et aldéhyde. Le composé selon l'invention répond donc à la formule générale (I) :

HO-CH₂-Ar-B (I)

où Ar représente un noyau aromatique et B représente CHO ou CH₂OH.

Le noyau aromatique est avantageusement un noyau à 5 ou 6 chaînons, comprenant, en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonction hydroxyméthyle.

En outre, le noyau aromatique peut également porter 0, 1 ou 2 autre(s) fonction(s), en particulier hydroxyle.

Dans le mode de réalisation dans lequel le noyau aromatique est un noyau à 6 chaînons, les fonctions B et hydroxyméthyle sont avantageusement en position méta ou en para l'une par rapport à l'autre.

Dans le mode de réalisation dans lequel le noyau aromatique est un noyau à 5 chaînons, le noyau peut comprendre un ou plusieurs hétéroatomes, en particulier des atomes d'azote, d'oxygène, de soufre, éventuellement oxydé sous forme de N-oxyde ou de S-oxyde. Avantageusement, le noyau aromatique comprend 1 ou 2 hétéroatome(s), de préférence 1 hétéroatome.

Dans ce mode de réalisation dans lequel le noyau aromatique est un noyau à 5 chaînons, au moins une des trois conditions suivantes est respectée :
- le noyau aromatique comprend 0 ou une seule fonction aldéhyde ;
- le noyau aromatique comprend une ou deux fonctions hydroxyméthyle ;
- outre les fonctions aldéhyde et hydroxyméthyle, le reste du noyau aromatique n'est pas substitué.

Avantageusement, ces trois conditions sont respectées.

Dans un premier cas, le noyau aromatique comprend
- une seule fonction aldéhyde ;
- une seule fonction hydroxyméthyle ;
- outre les fonctions aldéhyde et hydroxyméthyle, le reste du noyau aromatique n'est pas substitué.

Dans un deuxième cas, le noyau aromatique comprend
- 0 fonction aldéhyde ;
- deux fonctions hydroxyméthyle ;
- outre les fonctions hydroxyméthyle, le reste du noyau aromatique n'est pas substitué.

Avantageusement, le composé est de formule générale (II) : 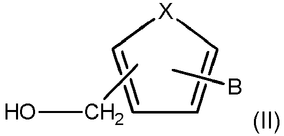 dans laquelle B représente CHO ou CH₂OH, X représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle.

Avantageusement, le composé est de formule générale (II') : 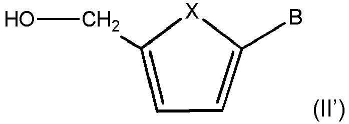 dans laquelle X, B sont tels que définis précédemment.

Dans un mode de réalisation particulièrement avantageux, B représente CHO. Dans un autre mode de réalisation, B représente CH₂OH.

Selon un mode de réalisation préférentiel, X représente O.

Dans une variante, le composé est de formule (IIa) : 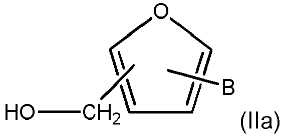
B étant tel que défini précédemment
et plus particulièrement de formule (II'a1) ou (II'a2) :

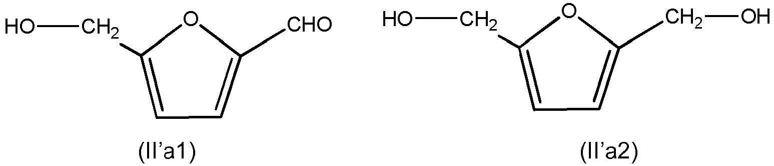

Le 5-(hydroxyméthyl)-furfural (II'a1) est un aldéhyde particulièrement adapté, étant donné que ce composé organique peut facilement être issu de ressources renouvelables. En effet, il est issu notamment de la déshydratation de certains sucres tels que le fructose, le glucose, le sucrose, la cellulose et l'inuline.

Dans un autre mode de réalisation, X représente NR₁ ou NO, avantageusement NR₁. R₁ est tel que défini précédemment.

Dans une variante, le composé est de formule (IIb) : 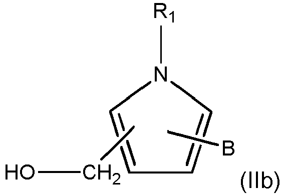
B étant tel que défini précédemment
et plus particulièrement de formule (II'b1) ou (II'b2) : 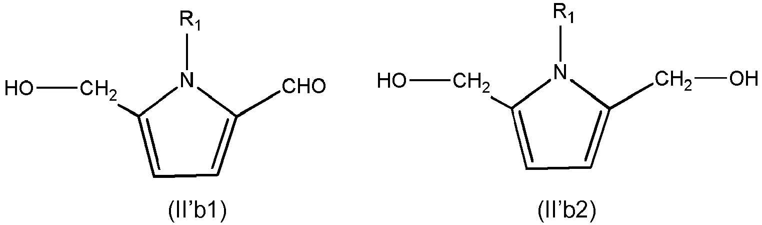
dans lesquelles R₁ représente un hydrogène, un groupe alkyle, aryle, arylalkyle, alkylaryle ou cycloalkyle. Avantageusement R₁ représente un hydrogène ou un groupe alkyle en C₁-C₆.

Dans un autre mode de réalisation, X représente S, SO, SO₂ ou SR₂R₃.

Dans une variante, le composé est de formule (Ilc) :
B étant tel que défini précédemment 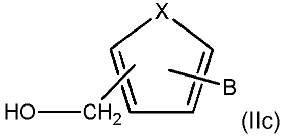
avec X représente S, SR₂R₃, SO, SO₂, R₂, R₃ représentent chacun, indépendamment les uns des autres, un hydrogène, un groupe alkyle, aryle, arylalkyle, alkylaryle ou cycloalkyle, B étant tel que défini précédemment ;
et plus particulièrement de formule (II'c1) ou (II'c2) : 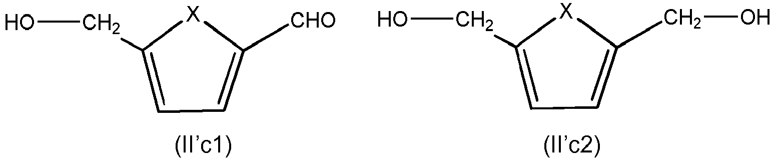
dans laquelle X représente S, SR₂R₃, SO, SO₂, R₂, R₃ représentent chacun, indépendamment les uns des autres, un hydrogène, un groupe alkyle, aryle, arylalkyle, alkylaryle ou cycloalkyle.

Le composé peut ainsi être :

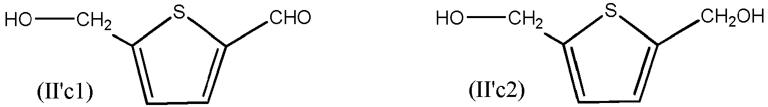

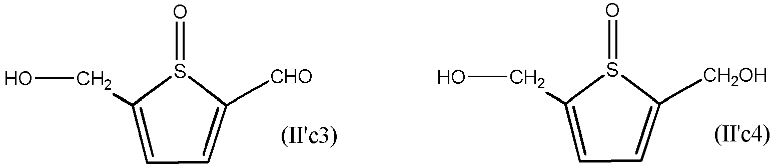

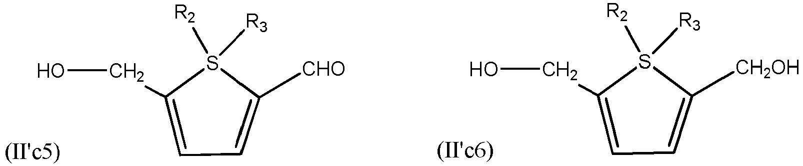

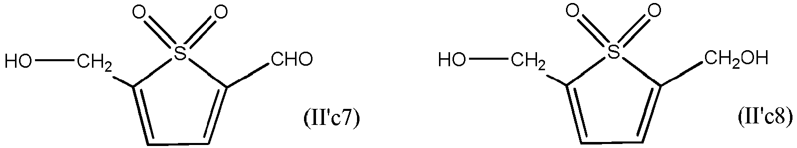

Avantageusement R₂, R₃ représentent chacun, l'un indépendamment de l'autre, un radical alkyle en C₁-C₆.

Le composé est avantageusement de formule (II'c1) ou (II'c2).

Dans une autre variante, le noyau aromatique est un noyau à 6 chaînons, pouvant comprendre 0, un ou plusieurs hétéroatomes, en particulier d'azote, éventuellement oxydé sous forme de N-oxyde. Dans une variante, le noyau aromatique comprend 0, 1, ou 2 hétéroatome(s).

Les fonctions B et hydroxyméthyle sont avantageusement en position méta ou en para l'une par rapport à l'autre.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

En outre, le noyau aromatique peut également porter 0, 1 ou 2 autre(s) fonction(s), en particulier hydroxyle.

Avantageusement, le composé est de formule générale (III) : 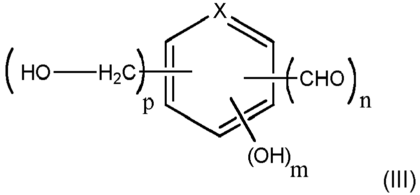 dans laquelle X représente C ou NR₁, n vaut 0, 1 ou 2, m vaut 0 ou 1, p vaut 1, 2 ou 3. R₁ représente un hydrogène, un groupe alkyle, aryle, arylalkyle, alkylaryle ou cycloalkyle. Conformément à l'invention, p+n>1 avec p>0.

Avantageusement R₁ représente un hydrogène ou un groupe alkyle en C₁-C₆.

Dans une variante, n vaut 1, m vaut 0 et p vaut 1.

Dans une autre variante, n vaut 1, m vaut 1 et p vaut 1.

Dans une autre variante, n vaut 2, m vaut 1 et p vaut 1.

Dans une autre variante, n vaut 1, m vaut 1 et p vaut 2.

Dans une autre variante, n vaut 0, m vaut 0 et p vaut 2.

Dans une autre variante, n vaut 0, m vaut 1 et p vaut 2.

Dans une autre variante, n vaut 1, m vaut 1 et p vaut 2.

Dans une autre variante, n vaut 0, m vaut 1 et p vaut 3.

Préférentiellement le noyau aromatique du composé de formule (III) est un noyau benzénique. Plus préférentiellement, ce composé de formule (III) est choisi dans le groupe constitué par le 2-hydroxymethyl-benzène-1-carboxaldéhyde, le 3- hydroxymethyl-benzène-1-carboxaldéhyde, le 4-hydroxymethyl-benzène-1-carboxaldéhyde, le 3-hydroxymethyl-6-hydroxy-benzène-1-carboxaldéhyde, le 3-hydroxymethyl-4-hydroxy-benzène-1-carboxaldéhyde, le 3-hydroxymethyl-2-hydroxy-benzène-1-carboxaldéhyde, le 3-hydroxymethyl-2-hydroxy-benzène-1,5-dicarboxaldéhyde, le 5-hydroxymethyl-2-hydroxy-benzène-1,3-dicarboxaldéhyde, le 3,5-hydroxymethyl-4-hydroxy-benzène-1-carboxaldéhyde, le 3,5-hydroxymethyl-2-hydroxy-benzène-1-carboxaldéhyde, le 1,2-hydroxymethyl-benzène, le 1,3-hydroxymethyl-benzène, le 1,4-hydroxymethyl-benzène, le 1,3-hydroxymethyl-6-hydroxy-benzène, le 1,3-hydroxymethyl-4-hydroxy-benzène, le 1,3-hydroxymethyl-2-hydroxy-benzène, le 1,3,5-hydroxymethyl-2-hydroxy-benzène, le 1,3-hydroxymethyl-6-hydroxy-benzène, le 1,3,5-hydroxymethyl-4-hydroxy-benzène, le 1,3,2-hydroxymethyl-2-hydroxy-benzène et les mélanges de ces composés.

Encore plus préférentiellement le composé aromatique utilisé est le 1-hydroxymethyl-benzène-4-carboxaldéhyde de formule (IIIa) ou le 1,4-hydroxymethyl-benzène de formule (IIIb) :

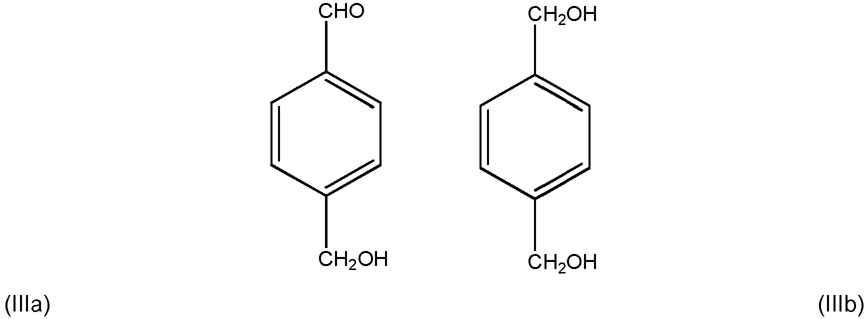

De préférence, la composition est dépourvue de formaldéhyde et/ou dépourvue de donneur de méthylène choisi dans le groupe constitué par l'hexa-méthylènetétramine (HMT), l'hexamethoxyméthylmélamine (H3M), l'hexaethoxyméthylmélamine, le chlorure de lauryloxyméthylpyridinium, le chlorure d'éthoxyméthylpyridinium, des polymères d'hexaméthoxyméthylmélamine de trioxanne de formaldéhyde, l'hexakis(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N,N',N"-tris(méthoxyméthyl)mélamine, la N,N',N"-tributyl-N,N',N"-triméthylolmélamine. Plus avantageusement, la composition est dépourvue de formaldéhyde et dépourvue des donneurs de méthylène décrits dans ce paragraphe.

Plus préférentiellement, la composition est dépourvue de formaldéhyde et/ou dépourvue de donneur de méthylène choisi dans le groupe constitué par l'hexaméthylènetétramine, l'hexaéthoxyméthylmélamine, l'hexaméthoxyméthylmélamine, le chlorure de lauryloxyméthylpyridinium, le chlorure d'éthoxyméthylpyridinium, l'hexaméthoxyméthylmélamine de trioxanne et les oxyméthylmélamines N-substituées répondant à la formule générale: 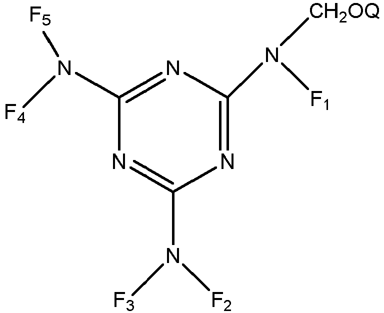 dans laquelle Q représente un groupe alkyle contenant de 1 à 8 atomes de carbone; F₁, F₂, F₃, F₄ et F₅ sont choisis, indépendamment l'un de l'autre, parmi le groupe constitué par un atome d'hydrogène, par un groupe alkyle contenant de 1 à 8 atomes de carbone, par le groupe -CH2OQ et leurs produits de condensation. Plus avantageusement, la composition est dépourvue de formaldéhyde et dépourvue des donneurs de méthylène décrits dans ce paragraphe.

Encore plus préférentiellement, la composition est dépourvue de formaldéhyde et/ou dépourvue de donneur de méthylène. Plus avantageusement, la composition est dépourvue de formaldéhyde et dépourvue des donneurs de méthylène.

Par dépourvue de formaldéhyde ou dépourvue de donneur de méthylène, on entend que le taux massique total du formaldéhyde ou du ou des donneurs de méthylène appartenant aux groupes décrits ci-dessus en poids total du ou des composés aromatiques A1 dans la composition est inférieur ou égal à 10%, de préférence à 5%, plus préférentiellement à 2% et encore plus préférentiellement à 1%.

Par dépourvue de formaldéhyde et dépourvue de donneur de méthylène, on entend que le taux massique total du formaldéhyde et du ou des donneurs de méthylène appartenant aux groupes décrits ci-dessus en poids total du ou des composés aromatiques A1 dans la composition est inférieur ou égal à 10%, de préférence à 5%, plus préférentiellement à 2% et encore plus préférentiellement à 1%.

### I.2 - Composé phénolique A2 de la composition de caoutchouc : polyphénol aromatique et/ou monophénol aromatique - composés A21 et/ou A22

Dans un mode de réalisation, le deuxième constituant essentiel de la résine est un polyphénol aromatique A21 comportant un ou plusieurs noyau(x) aromatique(s). Le polyphénol aromatique comprend au moins un noyau aromatique porteur d'au moins deux fonctions hydroxyle en position méta l'une par rapport à l'autre, les deux positions ortho d'au moins une des fonctions hydroxyle étant non substituées.

Dans un autre mode de réalisation, le deuxième constituant essentiel de la résine est un monophénol aromatique A22 comprenant au moins un noyau aromatique à six chainons portant une unique fonction hydroxyle. Sur ce monophénol aromatique, les deux positions ortho de la fonction hydroxyle sont non substituées, ou bien au moins une position ortho et la position para de la fonction hydroxyle sont non substituées.

Dans encore un autre mode de réalisation, le deuxième constituant essentiel est un mélange du polyphénol aromatique A21 et du monophénol aromatique A22 tels que décrits ci-dessus.

Conformément à l'invention, le composé A21 peut être, dans un mode de réalisation, une molécule simple de polyphénol aromatique comprenant un ou plusieurs noyaux aromatiques, au moins un de ces noyaux aromatiques, voire chaque noyau aromatique, étant porteur d'au moins deux fonctions hydroxyle en position méta l'une par rapport à l'autre, les deux positions ortho d'au moins une des fonctions hydroxyle étant non substituées.

De façon analogue, le composé A22 peut être, dans un mode de réalisation, une molécule simple de monophénol aromatique comprenant un ou plusieurs noyaux aromatiques à six chainons, au moins un de ces noyaux aromatiques à six chainons, voire chaque noyau aromatique à six chainons, étant porteur d'une unique fonction hydroxyle, les deux positions ortho de la fonction hydroxyle sont non substituées, ou bien, au moins une position ortho et la position para de la fonction hydroxyle sont non substituées.

De telles molécules simples ne comprennent pas de motif répétitif.

Conformément à l'invention, le composé A21 peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec le polyphénol comprenant au moins une fonction aldéhyde et/ou au moins un composé susceptible de réagir avec le polyphénol comprenant au moins deux fonctions hydroxyméthyle portées par un noyau aromatique.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

D'une façon analogue et conformément à l'invention, le composé A22 peut être, dans un autre mode de réalisation, une résine pré-condensée à base :
- d'au moins un monophénol aromatique comprenant au moins un noyau aromatique à six chainons portant une unique fonction hydroxyle :
   - les deux positions ortho de la fonction hydroxyle sont non substituées, ou
   - au moins une position ortho et la position para de la fonction hydroxyle sont non substituées;
- d'au moins un composé susceptible de réagir avec le monophénol comprenant au moins une fonction aldéhyde et/ou au moins un composé susceptible de réagir avec le monophénol comprenant au moins deux fonctions hydroxyméthyle portées par un noyau aromatique.

Une telle résine pré-condensée à base de monophénol aromatique est conforme à l'invention et comprend, contrairement à la molécule simple décrite ci-dessus, un motif répétitif. En l'espèce, le motif répétitif comprend au moins un noyau aromatique à six chainons porteur d'une unique fonction hydroxyle.

Dans un autre mode de réalisation, le composé A21 est un mélange d'un polyphénol aromatique formant une molécule simple et d'une résine pré-condensée à base de polyphénol aromatique.

Dans un autre mode de réalisation, le composé A22 est un mélange d'un monophénol aromatique formant une molécule simple et d'une résine pré-condensée à base de monophénol aromatique.

Dans les modes de réalisation particuliers qui suivent, on décrit le ou les noyaux aromatiques du polyphénol aromatique et/ou du monophénol aromatique. Par souci de clarté, on y décrit le « polyphénol aromatique » et/ou le « monophénol aromatique » sous sa forme de molécule simple. Ce polyphénol aromatique et/ou ce monophénol aromatique pourra ensuite être condensé et définira en partie le motif répétitif. Les caractéristiques de la résine pré-condensée sont décrites plus en détail par la suite.

### Polyphénol aromatique A21

Dans un mode de réalisation préféré, le noyau aromatique du polyphénol aromatique est porteur de trois fonctions hydroxyle en position méta les unes par rapport aux autres.

De préférence, les deux positions ortho de chaque fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique du polyphénol aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le polyphénol aromatique comprend plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Dans un mode de réalisation préféré, au moins un des noyaux aromatiques du polyphénol aromatique est porteur de trois fonctions hydroxyle en position méta les unes par rapport aux autres.

De préférence, les deux positions ortho de chaque fonction hydroxyle d'au moins un noyau aromatique sont non substituées.

Encore plus préférentiellement, les deux positions ortho de chaque fonction hydroxyle de chaque noyau aromatique sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le noyau aromatique porteur d'au moins deux fonctions hydroxyle en position méta l'une par rapport à l'autre, les deux positions ortho d'au moins une des fonctions hydroxyle étant non substituées, est un noyau benzénique.

Avantageusement, chaque noyau aromatique du polyphénol aromatique est un noyau benzénique.

A titre d'exemple de polyphénol aromatique comportant un seul noyau aromatique, on peut citer en particulier, le résorcinol et le phloroglucinol, pour rappel de formules développées (IV) et (V) :

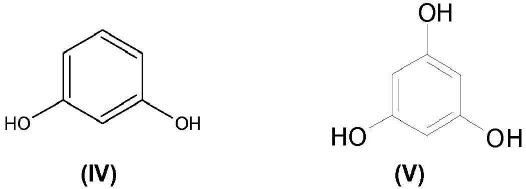

A titres d'exemples, dans le cas où le polyphénol aromatique comporte plusieurs noyaux aromatiques, au moins deux de ces noyaux aromatiques, identiques ou différents, sont choisis parmi ceux de formules générales : 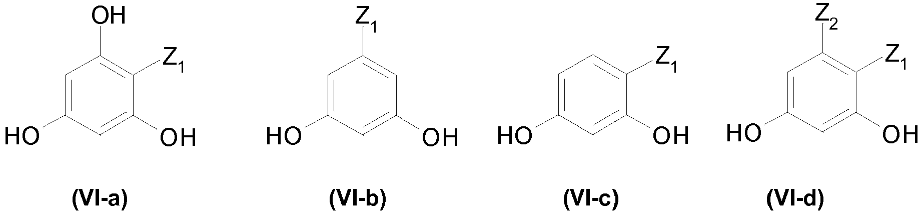 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide de formule développée suivante (VII) :

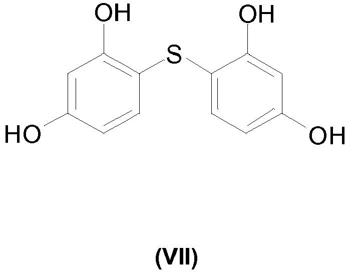

Un autre exemple de polyphénol aromatique est le 2,2',4,4'-tétrahydroxybenzophénone de formule développée suivante (VIII) :

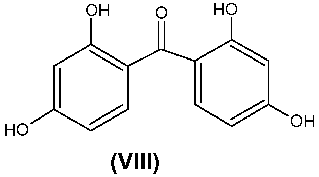

On note que chaque composé **VII** et **VIII** est un polyphénol aromatique comportant deux noyaux aromatiques (de formules **VI-c)** dont chacun est porteur d'au moins deux (en l'occurrence de deux) fonctions hydroxyle en position méta l'une par rapport à l'autre.

On note que dans le cas d'un polyphénol aromatique comportant au moins un noyau aromatique conforme à la formule **VI-b,** les deux positions ortho de chaque fonction hydroxyle d'au moins un noyau aromatique sont non substituées. Dans le cas d'un polyphénol aromatique comportant plusieurs noyaux aromatiques conformes à la formule **VI-b,** les deux positions ortho de chaque fonction hydroxyle de chaque noyau aromatique sont non substituées.

Selon un mode de réalisation de l'invention, le polyphénol aromatique est choisi dans le groupe constitué par le résorcinol **(IV),** le phloroglucinol (V), le 2,2',4,4'-tétrahydroxydiphényl sulfide **(VII),** la 2,2',4,4'-tétrahydroxybenzophenone **(VIII),** les résines pré-condensées à partir d'au moins un de ces phénols et les mélanges de ces composés. Dans un mode de réalisation particulièrement avantageux, le polyphénol aromatique est le phloroglucinol.

Dans un mode de réalisation, le composé A21 comprend une résine pré-condensée à base du polyphénol aromatique tel que décrit dans l'un quelconque de ces modes de réalisations.

Cette résine pré-condensée est avantageusement à base :
- d'au moins un polyphénol aromatique tel que défini précédemment, et préférentiellement choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et leurs mélanges ; et
- d'au moins un composé susceptible de réagir avec le polyphénol comprenant au moins une fonction aldéhyde et/ou au moins un composé susceptible de réagir avec le polyphénol comprenant au moins deux fonctions hydroxyméthyle portées par un noyau aromatique.

Le composé susceptible de réagir avec le polyphénol comprenant au moins une fonction aldéhyde et/ou le composé susceptible de réagir avec le polyphénol comprenant au moins deux fonctions hydroxyméthyle portées par un noyau aromatique et peut être un composé aromatique A1 tel que défini précédemment au paragraphe I.1, un composé de formule Ar-(CHO)₂, où Ar est tel que défini précédemment pour le composé aromatique A1 du paragraphe I.1, ou tout autre aldéhyde. Avantageusement, ledit composé susceptible de réagir avec le polyphénol comprenant au moins une fonction aldéhyde et/ou le composé susceptible de réagir avec le polyphénol comprenant au moins deux fonctions hydroxyméthyle portées par un noyau aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de polyphénol aromatique, le motif répétitif répond aux caractéristiques du polyphénol aromatique définies précédemment à l'exception qu'au moins un des atomes de carbone du noyau aromatique, qui était non substitué, est relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un composé A1 conforme à l'invention dans une étape ultérieure.

Le composé A21 peut également comprendre un mélange d'une molécule libre de polyphénol aromatique et d'une résine pré-condensée à base de polyphénol aromatique, telle que décrite précédemment. En particulier, le composé A21 peut également comprendre un mélange de phloroglucinol et d'une résine pré-condensée à base de phloroglucinol.

### Monophénol aromatique A22

Le monophénol A22 peut être conforme à deux variantes. Dans une variante, les deux positions ortho de la fonction hydroxyle sont non substituées. Dans une autre variante, au moins une position ortho et la position para de la fonction hydroxyle sont non substituées.

Avantageusement, dans la variante dans laquelle au moins une position ortho et la position para de la fonction hydroxyle sont non substituées, une unique position ortho est non substituée et la position para de la fonction hydroxyle est non substituée.

De préférence, quelle que soit la variante, les deux positions ortho de la fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le monophénol aromatique comprend plusieurs noyaux aromatiques à six chainons, au moins deux d'entre eux étant chacun porteur d'une unique fonction hydroxyle et, pour au moins une des fonctions hydroxyles, les deux positions ortho de la fonction hydroxyle sont non substituées, ou au moins une position ortho et la position para de la fonction hydroxyle sont non substituées.

De préférence, les deux positions ortho de chaque fonction hydroxyle d'au moins un noyau aromatique à six chainons sont non substituées.

Encore plus préférentiellement, les deux positions ortho de chaque fonction hydroxyle de chaque noyau aromatique à six chainons sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le ou chaque noyau aromatique du monophénol aromatique est un noyau benzénique.

De préférence, le monophénol aromatique est choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés.

Dans un mode de réalisation, le composé A22 comprend une résine pré-condensée à base du monophénol aromatique tel que décrit dans l'un quelconque de ces modes de réalisations.

Cette résine pré-condensée est avantageusement à base :
- d'au moins un monophénol aromatique tel que défini précédemment, et préférentiellement choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés ; et
- d'au moins un composé susceptible de réagir avec le monophénol comprenant au moins une fonction aldéhyde et/ou au moins un composé susceptible de réagir avec le monophénol comprenant au moins deux fonctions hydroxyméthyle portées par un noyau aromatique.

Le composé susceptible de réagir avec le monophénol comprenant au moins une fonction aldéhyde et/ou le composé susceptible de réagir avec le monophénol comprenant au moins deux fonctions hydroxyméthyle portées par un noyau aromatique et réagissant avec ledit monophénol aromatique peut être un composé aromatique A1 tel que défini précédemment au paragraphe I.1, un composé de formule Ar-(CHO)₂, où Ar est tel que défini précédemment pour le composé aromatique A1 du paragraphe I.1, ou tout autre aldéhyde. Avantageusement, ledit composé susceptible de réagir avec le monophénol comprenant au moins une fonction aldéhyde et/ou ledit composé susceptible de réagir avec le monophénol comprenant au moins deux fonctions hydroxyméthyle portées par un noyau aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de monophénol aromatique, le motif répétitif répond aux caractéristiques du monophénol aromatique définies précédemment à l'exception qu'au moins un des atomes de carbone du noyau aromatique à six chainons, qui était non substitué, est relié à un autre motif.

Quel que soit le composé autre que le monophénol aromatique à la base de la résine pré-condensée, cette résine pré-condensée est dépourvue de formaldéhyde libre. En effet, même dans le cas où la résine pré-condensée est à base d'un monophénol aromatique tel que décrit précédemment et de formaldéhyde, le formaldéhyde ayant déjà réagi avec le monophénol aromatique, la résine pré-condensée est dépourvue de formaldéhyde libre susceptible de pouvoir réagir avec un composé A1 conforme à l'invention dans une étape ultérieure.

Le composé A22 peut également comprendre un mélange d'une molécule libre de monophénol aromatique et d'une résine pré-condensée à base de monophénol aromatique, telle que décrite précédemment. En particulier, le composé A22 peut également comprendre un mélange de phénol et d'une résine pré-condensée à base de phénol.

### Composition de caoutchouc selon l'invention

Dans certains modes de réalisation, en fonction de l'utilisation de la composition, on utilisera une quantité de composé aromatique A1 allant de 0,1 à 30 pce. De même, on utilisera une quantité de composé phénolique A2 allant de 0,1 à 30 pce.

Dans certains modes de réalisation, le ratio molaire [composé aromatique A1] :[composé phénolique A2] varie avantageusement de 3 :1 à 1 :1, avantageusement de 3 :1 à 1,5 :1.

Selon l'utilisation que l'on fait de la composition, la composition de caoutchouc présente, à l'état cuit, un module sécant à 10% d'allongement MA10 mesuré selon la norme ASTM D 412 de 1998 (éprouvette C) supérieur ou égal à 10 MPa, de préférence à 20 MPa, préférentiellement à 30 MPa, plus préférentiellement à 40 MPa et encore plus préférentiellement à 60 MPa.

De préférence, la composition de caoutchouc comprend un élastomère diénique.

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les compositions de caoutchouc peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

De préférence, la composition de caoutchouc comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogenée présentant une surface BET ainsi qu'une surface spécifique CTAB toutes deux inferieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyle, nécessitant l'utilisation d'un agent de couplage pour établir la liaison entre la charge et l'élastomère.

De préférence, le taux de charge renforçante totale (noir de carbone et/ou charge inorganique renforçante telle que silice) est compris dans un domaine allant de 5 à 120 pce, plus préférentiellement de 5 à 100 pce et encore plus préférentiellement de 5 à 90 pce.

Préférentiellement, le taux de charge renforçante totale est compris dans un domaine allant de 10 à 120 pce, plus préférentiellement de 10 à 100 pce et encore plus préférentiellement de 10 à 90 pce.

Plus préférentiellement, le taux de charge renforçante totale est compris dans un domaine allant de 20 à 120 pce, plus préférentiellement de 20 à 100 pce et encore plus préférentiellement de 20 à 90 pce.

Encore plus préférentiellement, le taux de charge renforçante totale est compris dans un domaine allant de 30 à 120 pce, plus préférentiellement de 30 à 100 pce et encore plus préférentiellement de 30 à 90 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition de caoutchouc, seule ou en coupage avec du noir de carbone, son taux est compris dans un domaine de 0 à 70 pce, préférentiellement de 0 à 50 pce, en particulier également de 5 à 70 pce, et encore plus préférentiellement cette proportion varie de 5 à 50 pce, particulièrement de 5 à 40 pce.

De préférence, la composition de caoutchouc comprend des additifs divers.

Les compositions de caoutchouc peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue ou bien encore des promoteurs d'adhésion.

De préférence, la composition de caoutchouc comprend un système de réticulation, plus préférentiellement de vulcanisation.

Le système de vulcanisation, comprend un agent donneur de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur de vulcanisation et/ou un retardateur de vulcanisation.

Le soufre ou agent donneur de soufre est utilisé à un taux préférentiel compris dans un domaine de 0,5 à 10 pce, plus préférentiellement compris dans un domaine de 0,5 à 8,0 pce. L'ensemble des accélérateurs, retardateurs et activateurs de vulcanisation est utilisé à un taux préférentiel compris dans un domaine de 0,5 à 15 pce. Le ou les activateurs de vulcanisation est ou sont utilisés à un taux préférentiel compris dans un domaine de 0,5 et 12 pce.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, divers accélérateurs secondaires ou activateurs de vulcanisation connus tels qu'oxyde de zinc, acide stéarique, dérivés guanidiques (en particulier diphenylguanidine), etc.

On peut utiliser comme accélérateur (primaire ou secondaire) tout composé susceptible d'agir comme accélérateur de vulcanisation des élastomères diéniques en présence de soufre, notamment des accélérateurs du type thiazole ainsi que leurs dérivés, des accélérateurs de type thiurame, et de type dithiocarbamate de zinc. Ces accélérateurs sont plus préférentiellement choisis dans le groupe constitue par le disulfure de 2-mercaptobenzothiazyle (en abrégé "MBTS"), N-cyclohexyl-2-benzothiazyle sulfénamide (en abrégé "CBS"), N,N-dicyclohexyl- 2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Dans un mode de réalisation, la composition de caoutchouc se trouve à l'état cuit, c'est-à-dire vulcanisée. Dans d'autres modes de réalisation, la composition se trouve à l'état cru, c'est-à-dire non vulcanisée, la résine réticulée ayant été ajoutée ultérieurement à la composition non vulcanisée.

Dans un mode de réalisation, la résine n'ayant pas encore réticulé, la composition de caoutchouc comprend :
A1) au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) au moins un composé phénolique choisi parmi :
   A21) au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées
   A22) au moins un monophénol aromatique comprenant au moins un noyau aromatique à six chainons portant une unique fonction hydroxyle,
      - les deux positions ortho de la fonction hydroxyle étant non substituées ou
      - au moins une position ortho et la position para de la fonction hydroxyle étant non substituées,
et leurs mélanges.

De préférence, dans ce mode de réalisation, la composition est à l'état cru, c'est-à-dire non vulcanisée.

De préférence, la composition de caoutchouc peut être utilisée dans le pneumatique sous la forme d'une couche. Par couche, on entend tout élément tridimensionnel, de forme et d'épaisseur quelconques, notamment en feuille, bande ou autre élément de section droite quelconque, par exemple rectangulaire ou triangulaire.

Bien entendu, toutes les caractéristiques relatives au polyphénol aromatique et au composé de la composition comprenant la résine s'appliquent également à la composition comprenant le polyphénol aromatique et le composé non réticulés à l'état de résine.

### Composite de caoutchouc selon l'invention

Le composite de caoutchouc est renforcé d'au moins un élément de renfort noyé dans la composition de caoutchouc selon l'invention.

Ce composite de caoutchouc peut être préparé selon un procédé comportant au moins les étapes suivantes :
- au cours d'une première étape, combiner au moins un élément de renfort avec une composition de caoutchouc (ou élastomère, les deux termes sont synonymes) selon l'invention pour former un composite de caoutchouc renforcé de l'élément de renfort;
- puis, au cours d'une deuxième étape, réticuler par cuisson, par exemple par vulcanisation, de préférence sous pression, le composite ainsi formé.

Parmi les éléments de renforts, on pourra citer les éléments de renfort textiles, métalliques ou hybrides textile-métal.

Par textile, on entend, de manière bien connue de l'homme du métier, tout matériau en matière autre que métallique, qu'elle soit naturelle comme synthétique, susceptible d'être transformée en fil, fibre par tout procédé de transformation approprié. On peut citer par exemple, sans que les exemples ci-après soient limitatifs, un procédé de filage de polymère tel que par exemple filage au fondu, filage en solution ou filage de gel.

Ce matériau textile peut consister en un fil ou fibre ou également en un tissu réalisé à partir de fils ou fibres, par exemple d'un tissu tramé avec fils de chaîne et fils de trame, ou encore d'un tissu croisé avec fils croisés.

De préférence, ce matériau textile de l'invention est choisi dans le groupe constitué par les monofilaments (ou fils unitaires), les fibres multifilamentaires, les assemblages de tels fils ou fibres, et les mélanges de tels matériaux. Il s'agit plus particulièrement d'un monofilament, d'une fibre multifilamentaire ou d'un retors.

Par fil ou fibre, on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm.

Ce fil ou cette fibre peut prendre tout forme connue, il peut s'agir par exemple d'un monofilament élémentaire de diamètre important (par exemple et de préférence égal ou supérieur à 50 µm), d'une fibre multifilamentaire (constituée d'une pluralité de filaments élémentaires de faible diamètre, typiquement inférieur à 30 µm), d'un retors ou câblé textile formé de plusieurs fibres ou monofilaments textiles retordus ou câblés ensemble, ou encore d'un assemblage, un groupe, une rangée de fils ou fibres tels que par exemple une bande ou bandelette comportant plusieurs de ces monofilaments, fibres, retors ou câblés regroupés ensemble, par exemple alignés selon une direction principale, rectiligne ou pas.

Les matériaux textiles peuvent être en matière organique ou polymérique, comme en matière inorganique.

A titre d'exemples de matières inorganiques, on citera le verre, le carbone.

L'invention est préférentiellement mise en oeuvre avec des matériaux en matière polymérique, du type thermoplastique comme non thermoplastique.

A titre d'exemples de matières polymériques du type non thermoplastique, on citera par exemple l'aramide (polyamide aromatique) et la cellulose, naturelle comme artificielle, telle que le coton, la rayonne, le lin, le chanvre.

A titre d'exemples de matières polymériques du type thermoplastiques, on citera préférentiellement les polyamides aliphatiques et les polyesters. Parmi les polyamides aliphatiques, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Par métallique, on entend par définition un ou des éléments filaires constitués majoritairement (c'est-à-dire pour plus de 50% de sa masse) ou intégralement (pour 100% de sa masse) d'un matériau métallique. De préférence, le matériau métallique est l'acier, plus préférentiellement en acier perlitique (ou ferrito-perlitique) au carbone comprenant avantageusement entre 0,4% et 1,2% en masse de carbone.

L'élément de renfort métallique peut être un monofilament, un câble comprenant plusieurs monofilaments métalliques ou un câble multi-torons comprenant plusieurs câbles alors appelés torons.

Dans le cas préféré où l'élément de renfort comprend plusieurs monofilaments métalliques ou plusieurs torons, les monofilaments métalliques ou les torons sont assemblés par retordage ou par câblage. On rappelle qu'il existe deux techniques possibles d'assemblage:
- soit par retordage : les monofilaments métalliques ou les torons subissent à la fois une torsion collective et une torsion individuelle autour de leur propre axe, ce qui génère un couple de détorsion sur chacun des monofilaments ou torons ;
- soit par câblage: les monofilaments métalliques ou les torons ne subissent qu'une torsion collective et ne subissent pas de torsion individuelle autour de leur propre axe.

De façon optionnelle, l'élément de renfort comprend plusieurs monofilaments et est du type gommé in situ, c'est-à-dire que l'élément de renfort est gommé de l'intérieur, pendant sa fabrication même par une gomme de remplissage. De tels éléments filaires métalliques sont connus de l'homme du métier. La composition de la gomme de remplissage peut être identique ou non à la composition de caoutchouc dans laquelle l'élément de renfort est noyé.

Chaque élément de renfort, lorsqu'il est textile, est de préférence revêtu d'une couche d'une composition adhésive ou colle. La colle utilisée est par exemple du type RFL (Résorcinol-Formaldéhyde-Latex) ou par exemple, telle que décrite dans les publications WO2013017421, WO2013017422, WO2013017423 ou encore WO2015007642. Ainsi, la composition de caoutchouc selon l'invention est au contact direct de la composition adhésive. La composition adhésive est interposée entre la composition de caoutchouc selon l'invention et l'élément de renfort.

### Pneumatique selon l'invention

De tels pneumatiques sont par exemple ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

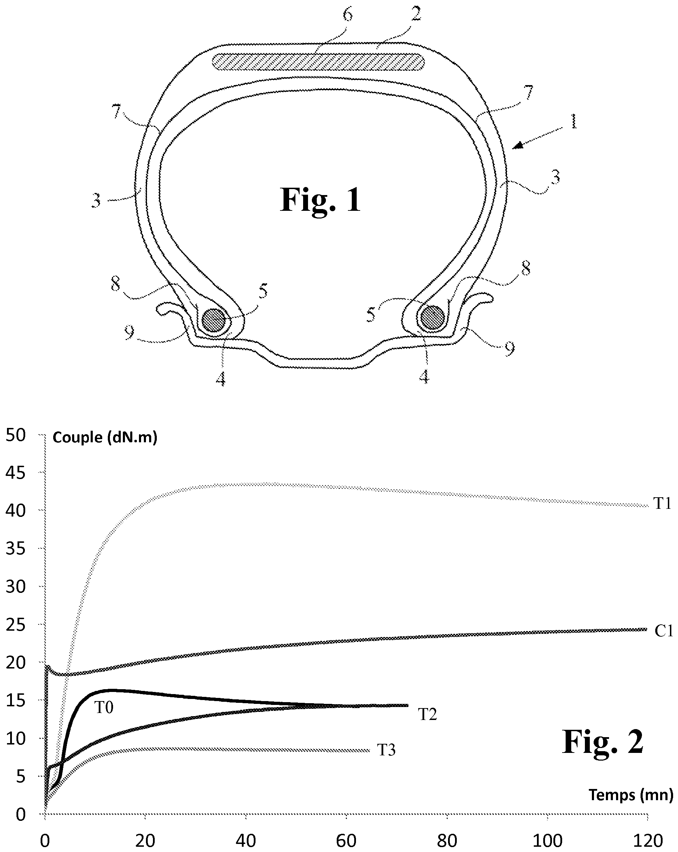

A titre d'exemple, la figure 1 annexée représente de manière très schématique (sans respect d'une échelle spécifique), une coupe radiale d'un pneumatique conforme à l'invention pour véhicule du type poids lourd.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique qu'au moins une armature de sommet 6 et/ou son armature de carcasse 7 comporte une composition de caoutchouc ou un composite selon l'invention. Bien entendu, l'invention concerne les objets précédemment décrits, à savoir le composite en caoutchouc et le pneumatique, tant à l'état cru (avant cuisson ou vulcanisation) qu'à l'état cuit (après cuisson).

### Procédé de fabrication de la composition selon l'invention

Le procédé de fabrication décrit précédemment et ci-après permet de fabriquer la composition selon l'invention.

La composition de caoutchouc peut être fabriquée dans des mélangeurs appropriés, en utilisant deux phases de préparation successives bien connues de l'homme du métier :
- une première phase de travail ou malaxage thermomécanique (phase dite "non-productive") à haute température, jusqu'à une température maximale comprise entre 110°C et 190°C, de préférence entre 130°C et 180°C,
- suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Dans un mode de réalisation, le procédé comporte les étapes suivantes :
- incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation, le composé aromatique A1 et le composé phénolique A2 ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (un élastomère diénique, charge renforçante,), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Apres refroidissement du mélange ainsi obtenu, on incorpore alors dans un mélangeur externe tel qu'un mélangeur à cylindres, maintenu à basse température (par exemple entre 40°C et 100°C), le système de réticulation, le composé aromatique A1 et le composé phénolique A2. L'ensemble est alors mélangé (phase productive) pendant quelques minutes, par exemple entre 2 et 15 min.

La composition finale ainsi obtenue à l'état cru peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

Puis, après une éventuelle étape d'assemblage entre elles de plusieurs compositions mises en forme de nappes ou de bandes sous la forme d'un composite ou d'une ébauche crue de pneumatique, on procède à une étape de réticulation, par exemple une étape de vulcanisation ou cuisson de la composition, du composite ou de l'ébauche durant laquelle on réticule la résine à base du composé aromatique et du polyphénol aromatique. On réalise l'étape de réticulation, ici de vulcanisation ou cuisson, à une température supérieure ou égale à 120°C, de préférence supérieure ou égale à 140°C. On obtient la composition à l'état cuit.

Dans un autre mode de réalisation, le procédé comporte les étapes suivantes :
- incorporer à un élastomère, au cours d'une première étape, une charge renforçante le composé phénolique A2 et le composé aromatique A1, en malaxant thermomécaniquement le tout, jusqu'à atteindre une température maximale comprise entre 110°C et 190°C ;
- refroidir l'ensemble à une température inférieure à 110°C ;
- incorporer ensuite, au cours d'une seconde étape, un système de réticulation;
- malaxer le tout à une température inférieure à 110°C.

L'invention ainsi que ses avantages seront aisément compris à la lumière des exemples de réalisation qui suivent.

### Exemples de réalisation de l'invention et essais comparatifs

Ces essais démontrent que :
- la rigidité des compositions de caoutchouc selon l'invention est largement augmentée par rapport à une composition de caoutchouc dépourvue de résine renforçante,
- la rigidité de la composition de caoutchouc est similaire (composition C1) ou largement améliorée (composition C2) par rapport à une composition de caoutchouc utilisant une résine renforçante classique à base d'un accepteur de méthylène avec l'HMT ou l'H3M en tant que donneur de méthylène (composition T1),
- la rigidité de la composition de caoutchouc selon l'invention aux températures élevées, en particulier pour des températures allant jusqu'à 150°C, est améliorée par rapport à une composition de caoutchouc dépourvue de résine renforçante,
- la résine de la composition selon l'invention est dépourvue de formaldéhyde et n'en génère pas lors de sa formation.

Pour cela, plusieurs compositions de caoutchouc, notées ci-après T0 à T3, C1 et C2 ont été préparées comme indiqué précédemment et sont rassemblées dans le tableau 1 annexé ci-après.

Toutes les compositions T0 à T3, C1 et C2 ont une partie commune dans leurs formulations (exprimées en pce, parties en poids pour cent parties d'élastomère): 100 pce de caoutchouc naturel, 75 pce de noir de carbone N326, 1,5 pce de N-1, 3-diméthylbutyl-N-phényl-para-phénylènediamine, 1,5 pce d'acide stéarique, 5 pce de ZnO, 1 pce de N-tertiarybutyl-2-benzothiazole sulfamide et 2,5 pce de soufre insoluble 20H.

La composition T0 ne comprend aucune résine renforçante ajoutée à cette partie commune.

En plus de la partie commune, la composition T1 comprend une résine renforçante à base d'hexa-méthylènetétramine (1,6 pce) et d'une résine phénolique pré-condensée (4 pce). La composition T1 représente une composition classique de l'état de la technique présentant une rigidité supérieure à celle de la composition T0.

En plus de la partie commune, chaque composition T2 et T3 comprend 14 pce de polyphénol aromatique A21 et 14 pce de benzaldéhyde.

En plus de la partie commune, la composition C1 comprend 14 pce de polyphénol aromatique A21 et 14 pce de composé aromatique A1.

En plus de la partie commune, la composition C2 comprend 14 pce de polyphénol aromatique A21 et 28 pce de composé aromatique A1.

Les compositions T0 à T3 ne sont pas conformes à l'invention contrairement aux compositions C1 et C2 qui sont conformes à l'invention.

A l'état cru, chaque composition de caoutchouc T2 et T3, non conforme à l'invention, comprend:
- au moins un aldéhyde aromatique, ici le benzaldéhyde, et
- au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées.

A l'état cuit, chaque composition de caoutchouc T2 et T3, non conforme à l'invention, comprend une résine phénol-aldéhyde à base :
- d'au moins un aldéhyde aromatique, ici le benzaldéhyde, et
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées.

A l'état cru, chaque composition de caoutchouc C1 et C2 selon l'invention comprend:
- au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
- au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées.

A l'état cuit, chaque composition de caoutchouc C1 et C2 selon l'invention comprend une résine à base :
- d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées.

Le polyphénol aromatique de la résine de chaque composition T2, T3, C1 et C2 est choisi dans le groupe constitué par le résorcinol, le phloroglucinol, le 2,2',4,4'-tétrahydroxydiphényl sulfide, la 2,2',4,4'-tétrahydroxybenzophenone, les résines pré-condensées à partir de ces phénols et les mélanges de ces composés.

Le polyphénol aromatique de la composition T1 est une résine pré-condensée à partir du résorcinol et du formaldéhyde.

Le polyphénol aromatique de la composition T3 comprend un unique noyau aromatique, ici benzénique, porteur de deux, et seulement deux, fonctions hydroxyle en position méta l'une par rapport à l'autre. En l'espèce, il s'agit du résorcinol.

Le polyphénol de chaque composition T2, C1 et C2 comprend un unique noyau aromatique, ici benzénique, porteur de trois, et seulement trois, fonctions hydroxyle en position méta l'une par rapport à l'autre. En l'espèce, il s'agit du phloroglucinol.

Pour les polyphénols aromatiques de chaque composition T2, T3, C1 et C2, le reste du noyau aromatique du polyphénol aromatique est non substitué. En particulier, les deux positions ortho de chaque fonction hydroxyle sont non substituées.

Le composé aromatique de chaque composition C1 et C2 selon l'invention est le 5-(hydroxyméthyl)-furfural.

### Procédé de préparation

Dans une première étape, on a incorporé à un élastomère la charge renforçante, en malaxant thermomécaniquement le tout, jusqu'à atteindre une température maximale comprise entre 110°C et 190°C. Puis on a refroidit l'ensemble à une température inférieure à 110°C. Ensuite, on a incorporé, au cours d'une seconde étape, le système de réticulation, une résine pré-condensée et un donneur de méthylène (T1) ou le polyphénol aromatique et le 5-(hydroxyméthyl)-furfural (C1, C2) ou le polyphénol aromatique et le benzaldéhyde (T2, T3). A l'issue de cette seconde étape, on a chauffé le mélange à 150°C jusqu'à l'obtention du couple rhéométrique maximum afin de vulcaniser la composition et réticuler la résine. Puis, on a réalisé une caractérisation de la rigidité à 23°C de la composition lors d'un essai en traction.

### Caractérisation de la rigidité à haute température - Couple rhéométrique maximum

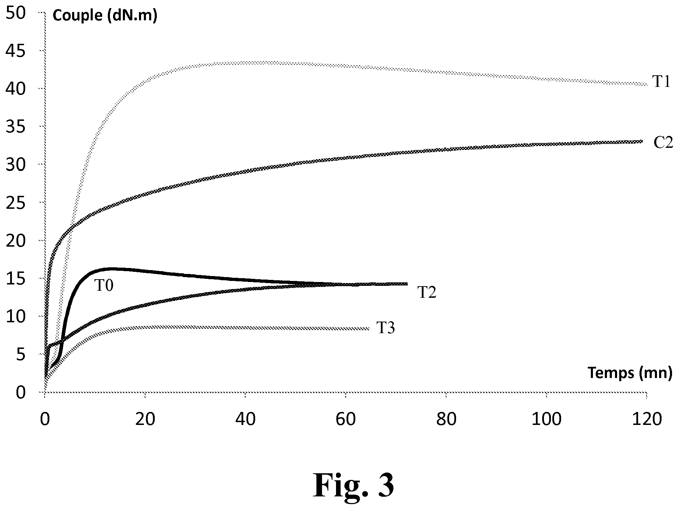

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la vulcanisation et de la réticulation de la résine. De l'évolution du couple rhéométrique, on détermine le couple rhéométrique maximum Cmax reporté dans le tableau 1. Plus le couple rhéométrique maximum Cmax est élevé, plus la composition présente une rigidité pouvant être maintenue à haute température. On a représenté sur les figures 2 et 3 chaque courbe représentant l'évolution du couple rhéométrique respectivement des compositions C1 à C2 ainsi que celles représentant l'évolution du couple rhéométrique des compositions T0 à T3.

Plus le couple rhéométrique maximum Cmax est élevé, plus la composition présente une rigidité pouvant être maintenue à haute température.

### Caractérisation de la rigidité à 23°C - Essai de traction

Ces essais permettent de déterminer les contraintes d'élasticité et les propriétés à la rupture. Sauf indication différente, ils sont effectués conformément à la norme ASTM D 412 de 1998 (éprouvette C). On mesure en seconde élongation (i.e. après un cycle d'accommodation) les modules sécants dits "nominaux" (ou contraintes apparentes, en MPa) à 10% d'allongement (noté "MA10"). Toutes ces mesures de traction sont effectuées dans les conditions normales de température et d'hygrométrie, selon la norme ASTM D 1349 de 1999 et reportées dans le tableau 1.

Tout d'abord, les résultats du tableau 1 montre que l'utilisation d'une résine renforçante de l'état de la technique (T1) permet d'obtenir une rigidité à 23°C et une tenue de cette rigidité à des températures plus élevées meilleure que pour une composition dépourvue de résine renforçante (T0). Toutefois, la rigidité à 23°C de la composition T1 est significativement inférieure à celle de la composition C2 selon l'invention et similaire à celle de la composition C1 selon l'invention.

De plus, les résultats du tableau 1 montrent que l'utilisation d'un aldéhyde aromatique comprenant un noyau benzénique portant une unique fonction aldéhyde (T2 et T3) conduit à une baisse ou au mieux un maintien de la rigidité à des températures plus élevées par rapport à la composition T0 contrairement aux composés aromatiques des compositions C1 et C2 qui conduisent à une augmentation du maintien de la rigidité à des températures plus élevées. Ces résultats sont relativement inattendus pour l'homme du métier compte tenu du fait que, *a priori,* le composé aromatique des compositions C1 et C2 présente une réactivité inférieure à celle du monoaldéhyde aromatique des compositions T2 et T3.

L'invention ne se limite pas aux modes de réalisation décrits précédemment.

Dans d'autres modes de réalisation, on pourra envisager que la résine soit à base d'un ou plusieurs composés aromatiques A1 et d'un ou plusieurs composés phénoliques A2 conformément à l'invention et, en plus de ces constituants, à base d'un ou plusieurs aldéhydes additionnels non conformes à l'invention et/ou un ou plusieurs polyphénols ou monophénols aromatiques additionnels non conformes à l'invention.

**Tableau 1**

| **Composition** | **Donneur de méthylène** | **Phénol** | **MA10 (MPa)** | **Cmax (dN.m)** |
|---|---|---|---|---|
| T0 | / | / | 6,7 | 16 |
| T1 | Hexa-méthylènetétramine (1) | Résine SRF (2) | 16,5 | 43 |

| **Composition** | **Aldéhyde aromatique** | **Polyphénol aromatique** | **MA10 (MPa)** | **Cmax (dN.m)** |
|---|---|---|---|---|
| T2 | Benzaldéhyde (3) | Phloroglucinol (4) | 14,7 | 14 |
| T3 | Benzaldéhyde (3) | Résorcinol (5) | 12,1 | 7 |

| **Composition** | **Composé aromatique** | **Polyphénol aromatique** | **MA10 (MPa)** | **Cmax (dN.m)** |
|---|---|---|---|---|
| C1 | 5-(hydroxyméthyl)-furfural (6) | Phloroglucinol (4) | 15,1 | 24 |
| C2 | 5-(hydroxyméthyl)-furfural (6) | Phloroglucinol (4) | 31 | 33 |

| | | | | |
|---|---|---|---|---|
| (1) Hexa-méthylènetétramine (de la société Sigma-Aldrich ; de pureté ≥ 99%) ; (2) Résine précondensée SRF 1524 (de la société Schenectady ; diluée à 75%); (3) Benzaldhéhyde (de la société Sigma-Aldrich, de pureté ≥ 99,5%) ; (4) Phloroglucinol (de la société Alfa Aesar ; de pureté 99%) ; (5) Résorcinol (de la société Sumitomo ; de pureté 99.5%) ; (6) 5-(hydroxyméthyl)-furfural (de la société Aldrich ; de pureté ≥ 99%) | | | | |

## Revendications

1. Composition de caoutchouc comprenant une matrice d'élastomère ou de caoutchouc dans laquelle est dispersé au moins un autre composant, **caractérisé en ce qu'**elle comprend au moins une résine à base:
A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) d'au moins un composé phénolique choisi parmi :
- A21) au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées ;
- A22) au moins un monophénol aromatique comprenant au moins un noyau aromatique à six chainons portant une unique fonction hydroxyle,
- les deux positions ortho de la fonction hydroxyle étant non substituées, ou
- au moins une position ortho et la position para de la fonction hydroxyle étant non substituées ;
- et leurs mélanges.

2. Composition de caoutchouc selon la revendication précédente, dans laquelle le composé aromatique A1) répond à la formule générale (II) : 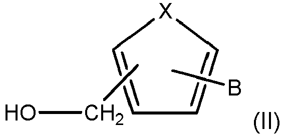 où B représente CHO ou CH₂OH, X représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle, de préférence le composé aromatique A1) est choisi dans le groupe constitué par le 5-(hydroxyméthyl)-furfural, le 2,5-di(hydroxyméthyle)furane et les mélanges de ces composés.

3. Composition de caoutchouc selon l'une quelconque des revendications précédentes, dans laquelle le noyau aromatique du polyphénol aromatique est porteur de trois fonctions hydroxyle en position méta les unes par rapport aux autres, et/ou sur le noyau aromatique du polyphénol aromatique les deux positions ortho de chaque fonction hydroxyle sont non substituées, préférentiellement, le reste du noyau aromatique du polyphénol aromatique est non substitué.

4. Composition selon l'une quelconque des revendications précédentes, dans laquelle le polyphénol aromatique comprend plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle, en particulier de chaque fonction hydroxyle, d'au moins un noyau aromatique, en particulier de chaque noyau aromatique, étant non substituées, de préférence au moins un des noyaux aromatiques du polyphénol aromatique étant porteur de trois fonctions hydroxyle en position méta les unes par rapport aux autres.

5. Composition selon l'une quelconque des revendications précédentes, dans lequel chaque noyau aromatique du polyphénol aromatique est un noyau benzénique.

6. Composition selon l'une quelconque des revendications précédentes, dans laquelle le polyphénol aromatique est choisi dans le groupe constitué par le résorcinol, le phloroglucinol, le 2,2',4,4'-tétrahydroxydiphényl sulfide, la 2,2',4,4'-tétrahydroxybenzophenone, et les mélanges de ces composés, de préférence le polyphénol aromatique est le le phloroglucinol.

7. Composition selon l'une quelconque des revendications 1 à 5, dans laquelle le polyphénol aromatique est une résine pré-condensée à base :
- d'au moins un polyphénol comprenant au moins un noyau aromatique porteur d'au moins deux fonctions hydroxyle en position méta l'une par rapport à l'autre, les deux positions ortho d'au moins une des fonctions hydroxyle étant non substituées, et
- d'au moins un composé susceptible de réagir avec le polyphénol comprenant au moins une fonction aldéhyde et/ou un composé susceptible de réagir avec le polyphénol comprenant au moins deux fonctions hydroxyméthyle portées par un noyau aromatique, en particulier choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés, plus particulièrement choisi dans le groupe constitué par le 5-(hydroxyméthyl)-furfural, le 2,5-di(hydroxyméthyle)furane et les mélanges de ces composés.

8. Composition de caoutchouc selon l'une quelconque des revendications précédentes, comprenant un élastomère diénique choisi dans le groupe constitué par les polybutadiènes, les polyisoprènes de synthèse, le caoutchouc naturel, les copolymères de butadiène, les copolymères d'isoprène et les mélanges de ces élastomères.

9. Composition de caoutchouc selon l'une quelconque des revendications précédentes, à l'état cuit.

10. Composition de caoutchouc comprenant une matrice d'élastomère ou de caoutchouc dans laquelle est dispersé au moins un autre composant, **caractérisé en ce qu'**elle comprend :
A1) au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
A2) au moins un composé phénolique choisi parmi :
- A21) au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées ;
- A22) au moins un monophénol aromatique comprenant au moins un noyau aromatique à six chainons portant une unique fonction hydroxyle,
- les deux positions ortho de la fonction hydroxyle étant non substituées, ou
- au moins une position ortho et la position para de la fonction hydroxyle étant non substituées ;
- et leurs mélanges.

11. Composition de caoutchouc selon la revendication précédente, à l'état cru.

12. Procédé de fabrication d'une composition de caoutchouc à l'état cru comprenant une matrice d'élastomère ou de caoutchouc dans laquelle est dispersé au moins un autre composant, **caractérisé en ce qu'**il comprend une étape de mélangeage :
- A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
- A2) d'au moins un composé phénolique choisi parmi :
- A21) au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées ;
- A22) au moins un monophénol aromatique comprenant au moins un noyau aromatique à six chainons portant une unique fonction hydroxyle,
- les deux positions ortho de la fonction hydroxyle étant non substituées, ou
- au moins une position ortho et la position para de la fonction hydroxyle étant non substituées ;
- leurs mélanges; et
- d'au moins un élastomère.

13. Procédé de fabrication d'une composition de caoutchouc à l'état cuit comprenant une matrice d'élastomère ou de caoutchouc dans laquelle est dispersé au moins un autre composant, **caractérisé en ce qu'il comprend** :
- une étape de fabrication d'une composition de caoutchouc à l'état cru comprenant une étape de mélangeage :
- A1) d'au moins un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle; et
- A2) d'au moins un composé phénolique choisi parmi :
- A21) au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées ;
- A22) au moins un monophénol aromatique comprenant au moins un noyau aromatique à six chainons portant une unique fonction hydroxyle,
- les deux positions ortho de la fonction hydroxyle étant non substituées, ou
- au moins une position ortho et la position para de la fonction hydroxyle étant non substituées ;
- et leurs mélanges,
- puis, une étape de mise en forme de la composition de caoutchouc à l'état cru,
- puis, une étape de réticulation de la composition de caoutchouc durant laquelle on réticule une résine à base du composé phénolique A2) et du composé aromatique A1).

14. Composition de caoutchouc, **caractérisée en ce qu'**elle est susceptible d'être obtenue par un procédé selon la revendication 13.

15. Pneumatique (1), **caractérisé en ce qu'**il comprend une composition de caoutchouc selon l'une quelconque des revendications 1 à 11 ou selon la revendication 14.

## Patentansprüche

1. Kautschukzusammensetzung, umfassend eine Elastomer- oder Kautschukmatrix, in der mindestens eine andere Komponente dispergiert ist, **dadurch gekennzeichnet, dass** sie mindestens ein Harz auf Basis von
A1) mindestens einer aromatischen Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
A2) mindestens einer Phenolverbindung, ausgewählt aus:
- A21) mindestens einem aromatischen Polyphenol mit mindestens einem aromatischen Kern, der mindestens zwei Hydroxylfunktionen in meta-Position zueinander trägt, wobei die beiden ortho-Positionen mindestens einer der Hydroxylfunktionen unsubstituiert sind;
- A22) mindestens einem aromatischen Monophenol mit mindestens einem sechsgliedrigen aromatischen Kern, der eine einzige Hydroxylfunktion trägt,
- wobei die beiden ortho-Positionen in der Hydroxylfunktion unsubstituiert sind oder
- mindestens eine ortho-Position und die para-Position der Hydroxylfunktion unsubstituiert sind;
- und Mischungen davon
umfasst.

2. Kautschukzusammensetzung nach dem vorhergehenden Anspruch, wobei die aromatische Verbindung A1) der allgemeinen Formel (II) entspricht: 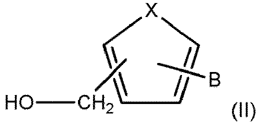 wobei B für CHO oder CH₂OH steht, X für O, NR₁, NO, S, SO, SO₂ oder SR₂R₃ steht, R₁ für Wasserstoff oder eine Alkyl-, Aryl-, Arylalkyl-, Alkylaryl- oder Cycloalkylgruppe steht, R₂ und R₃ jeweils unabhängig voneinander für Wasserstoff oder eine Alkyl-, Aryl-, Arylalkyl-, Alkylaryl- oder Cycloalkylgruppe stehen, vorzugsweise die aromatische Verbindung A1) aus der Gruppe bestehend aus 5-(Hydroxymethyl)-furfural, 2,5-Di(hydroxymethyl)furan und Mischungen dieser Verbindungen ausgewählt ist.

3. Kautschukzusammensetzung nach einem der vorhergehenden Ansprüche, wobei der aromatische Kern des aromatischen Polyphenols drei Hydroxylfunktionen in meta-Position zueinander trägt und/oder an dem aromatischen Kern des aromatischen Polyphenols die beiden ortho-Positionen jeder Hydroxylfunktion unsubstituiert sind, vorzugsweise der aromatische Kern des aromatischen Polyphenols unsubstituiert ist.

4. Zusammensetzung nach einem der vorhergehenden Ansprüche, wobei das aromatische Polyphenol mehrere aromatische Kerne umfasst, von denen mindestens zwei jeweils mindestens zwei Hydroxylfunktionen in meta-Position zueinander tragen, wobei die beiden ortho-Positionen einer der Hydroxylfunktionen, insbesondere jeder Hydroxylfunktion, mindestens eines aromatischen Kerns, insbesondere jedes aromatischen Kerns, unsubstituiert sind, bevorzugt mindestens einer der aromatischen Kerne des aromatischen Polyphenols drei Hydroxylfunktionen in meta-Position zueinander trägt.

5. Zusammensetzung nach einem der vorhergehenden Ansprüche, wobei jeder aromatische Kern des aromatischen Polyphenols ein Benzolkern ist.

6. Zusammensetzung nach einem der vorhergehenden Ansprüche, wobei das aromatische Polyphenol aus der Gruppe bestehend aus Resorcinol, Phloroglucinol, 2,2',4,4'-Tetrahydroxydiphenyl, 2,2',4,4'-Tetrahydroxybenzophenon und Mischungen dieser Verbindungen ausgewählt ist, vorzugsweise das aromatische Polyphenol Phloroglucinol ist.

7. Zusammensetzung nach einem der Ansprüche 1 bis 5, wobei es sich bei dem aromatischen Polyphenol um ein vorkondensiertes Harz auf Basis von
- mindestens einem Polyphenol mit mindestens einem aromatischen Kern, der mindestens zwei Hydroxylfunktionen in meta-Position zueinander trägt, wobei die beiden ortho-Positionen mindestens einer der Hydroxylfunktionen unsubstituiert sind, und
- mindestens einer gegenüber dem Polyphenol reaktionsfähigen Verbindung mit mindestens einer Aldehydfunktion und/oder einer gegenüber dem Polyphenol reaktionsfähigen Verbindung mit mindestens zwei Hydroxymethylfunktionen an einem aromatischen Kern, insbesondere ausgewählt aus der Gruppe bestehend aus einer aromatischen Verbindung mit einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt, Formaldehyd, Benzaldehyd, Furfuraldehyd, 2,5-Furandicarboxaldehyd, 1,4-Benzoyldicarboxaldehyd, 1,3-Benzoyldicarboxaldehyd, 1,2-Benzoyldicarboxaldehyd und Mischungen dieser Verbindungen, spezieller ausgewählt aus der Gruppe bestehend aus 5-(Hydroxymethyl)furfural, 2,5-Di(hydroxymethyl)furan und Mischungen dieser Verbindungen,
handelt.

8. Kautschukzusammensetzung nach einem der vorhergehenden Ansprüche, umfassend ein Dienelastomer ausgewählt aus der Gruppe bestehend aus Polybutadienen, synthetischen Polyisoprenen, Naturkautschuk, Butadien-Copolymeren, Isopren-Copolymeren und Mischungen dieser Elastomere.

9. Kautschukzusammensetzung nach einem der vorhergehenden Ansprüche in gehärtetem Zustand.

10. Kautschukzusammensetzung, umfassend eine Elastomer- oder Kautschukmatrix, in der mindestens eine andere Komponente dispergiert ist, **dadurch gekennzeichnet, dass** sie
A1) mindestens eine aromatische Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
A2) mindestens eine Phenolverbindung, ausgewählt aus:
- A21) mindestens einem aromatischen Polyphenol mit mindestens einem aromatischen Kern, der mindestens zwei Hydroxylfunktionen in meta-Position zueinander trägt, wobei die beiden ortho-Positionen mindestens einer der Hydroxylfunktionen unsubstituiert sind;
- A22) mindestens einem aromatischen Monophenol mit mindestens einem sechsgliedrigen aromatischen Kern, der eine einzige Hydroxylfunktion trägt,
- wobei die beiden ortho-Positionen in der Hydroxylfunktion unsubstituiert sind oder
- mindestens eine ortho-Position und die para-Position der Hydroxylfunktion unsubstituiert sind;
- und Mischungen davon
umfasst.

11. Kautschukzusammensetzung nach dem vorhergehenden Anspruch in rohem Zustand.

12. Verfahren zur Herstellung einer Kautschukzusammensetzung in rohem Zustand, umfassend eine Elastomer- oder Kautschukmatrix, in der mindestens eine andere Komponente dispergiert ist, **dadurch gekennzeichnet, dass** es einen Schritt des Mischens von
- A1) mindestens einer aromatischen Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
- A2) mindestens einer Phenolverbindung, ausgewählt aus:
- A21) mindestens einem aromatischen Polyphenol mit mindestens einem aromatischen Kern, der mindestens zwei Hydroxylfunktionen in meta-Position zueinander trägt, wobei die beiden ortho-Positionen mindestens einer der Hydroxylfunktionen unsubstituiert sind;
- A22) mindestens einem aromatischen Monophenol mit mindestens einem sechsgliedrigen aromatischen Kern, der eine einzige Hydroxylfunktion trägt,
- wobei die beiden ortho-Positionen in der Hydroxylfunktion unsubstituiert sind oder
- mindestens eine ortho-Position und die para-Position der Hydroxylfunktion unsubstituiert sind;
- und Mischungen davon und
- mindestens eines Elastomers
umfasst.

13. Verfahren zur Herstellung einer Kautschukzusammensetzung in gehärtetem Zustand, umfassend eine Elastomer- oder Kautschukmatrix, in der mindestens eine andere Komponente dispergiert ist, **dadurch gekennzeichnet, dass** es Folgendes umfasst:
- einen Schritt der Herstellung einer Kautschukzusammensetzung in rohem Zustand, umfassend einen Schritt des Mischens von
- A1) mindestens einer aromatischen Verbindung mit mindestens einem aromatischen Kern, der mindestens zwei Funktionen trägt, wobei es sich bei einer dieser Funktionen um eine Hydroxymethylfunktion handelt und es sich bei der anderen um eine Aldehydfunktion oder eine Hydroxymethylfunktion handelt; und
- A2) mindestens einer Phenolverbindung, ausgewählt aus:
- A21) mindestens einem aromatischen Polyphenol mit mindestens einem aromatischen Kern, der mindestens zwei Hydroxylfunktionen in meta-Position zueinander trägt, wobei die beiden ortho-Positionen mindestens einer der Hydroxylfunktionen unsubstituiert sind;
- A22) mindestens einem aromatischen Monophenol mit mindestens einem sechsgliedrigen aromatischen Kern, der eine einzige Hydroxylfunktion trägt,
- wobei die beiden ortho-Positionen in der Hydroxylfunktion unsubstituiert sind oder
- mindestens eine ortho-Position und die para-Position der Hydroxylfunktion unsubstituiert sind;
- und Mischungen davon,
- dann einen Schritt des Formens der Kautschukzusammensetzung in rohem Zustand,
- dann einen Schritt des Vernetzens der Kautschukzusammensetzung, bei dem man ein Harz auf Basis der Phenolverbindung A2) und der aromatischen Verbindung A1) vernetzt.

14. Kautschukzusammensetzung, **dadurch gekennzeichnet, dass** sie durch ein Verfahren nach Anspruch 13 erhältlich ist.

15. Reifen (1), **dadurch gekennzeichnet, dass** er eine Kautschukzusammensetzung nach einem der Ansprüche 1 bis 11 oder nach Anspruch 14 umfasst.

## Claims

1. Rubber composition, **characterized in that** it comprises at least one resin based:
A1) on at least one aromatic compound comprising at least one aromatic nucleus bearing at least two functional groups, one of these functional groups being a hydroxymethyl functional group and the other being an aldehyde functional group or a hydroxymethyl functional group; and
A2) on at least one phenolic compound chosen from:
- A21) at least one aromatic polyphenol comprising at least one aromatic nucleus bearing at least two hydroxyl functional groups in the meta position with respect to one another, the two positions ortho to at least one of the hydroxyl functional groups being unsubstituted;
- A22) at least one aromatic monophenol comprising at least one six-membered aromatic nucleus bearing a single hydroxyl functional group,
- the two positions ortho to the hydroxyl functional group being unsubstituted or
- at least one position ortho to and the position para to the hydroxyl functional group being unsubstituted;
- and their mixtures.

2. Rubber composition according to the preceding claim, in which the aromatic compound A1) corresponds to the general formula (II): 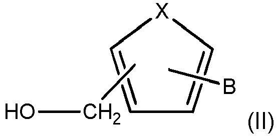 where B represents CHO or CH₂OH, X represents O, NR₁, NO, S, SO, SO₂ or SR₂R₃, R₁ represents a hydrogen or an alkyl, aryl, arylalkyl, alkylaryl or cycloalkyl group and R₂ and R₃ each represent, independently of one another, a hydrogen or an alkyl, aryl, arylalkyl, alkylaryl or cycloalkyl group, more preferably the aromatic compound A1) is selected from the group consisting of 5-(hydroxymethyl)furfural, 2,5-di(hydroxymethyl)furan and the mixtures of these compounds.

3. Rubber composition according to any one of the preceding claims, in which the aromatic nucleus of the aromatic polyphenol bears three hydroxyl functional groups in the meta position with respect to one another, and/or on the aromatic nucleus of the aromatic polyphenol, the two positions ortho to each hydroxyl functional group are unsubstituted, preferably the remainder of the aromatic nucleus of the aromatic polyphenol is unsubstituted.

4. Composition according to any one of the preceding claims, in which the aromatic polyphenol comprises several aromatic nuclei, at least two of them each bearing at least two hydroxyl functional groups in the meta position with respect to one another, the two positions ortho to at least one of the hydroxyl functional groups of at least one aromatic nucleus being unsubstituted, preferably at least one of the aromatic nuclei of the aromatic polyphenol bears three hydroxyl functional groups in the meta position with respect to one another.

5. Composition according to any one of the preceding claims, in which each aromatic nucleus of the aromatic polyphenol is a benzene nucleus.

6. Composition according to any one of the preceding claims, in which the aromatic polyphenol is selected from the group consisting of resorcinol, phloroglucinol, 2,2',4,4'-tetrahydroxydiphenyl sulfide, 2,2',4,4'-tetrahydroxybenzophenone and the mixtures of these compounds; preferably, the aromatic polyphenol is phloroglucinol.

7. Composition according to claims1 to 5, in which the aromatic polyphenol is a pre-condensed resin based:
- on at least one polyphenol comprising at least one aromatic nucleus bearing at least two hydroxyl functional groups in the meta position with respect to one another, the two positions ortho to at least one of the hydroxyl functional groups being unsubstituted; and
- on at least one compound capable of reacting with the polyphenol comprising at least one aldehyde functional group and/or at least one compound capable of reacting with the polyphenol comprising at least two hydroxymethyl functional groups borne by an aromatic nucleus, in particularly selected from the group consisting of an aromatic compound comprising an aromatic nucleus bearing at least two functional groups, one of these functional groups being a hydroxymethyl functional group and the other being an aldehyde functional group or a hydroxymethyl functional group, formaldehyde, benzaldehyde, furfuraldehyde, 2,5-furandicarboxaldehyde, 1,4-benzenedicarboxaldehyde, 1,3-benzenedicarboxaldehyde, 1,2-benzenedicarboxaldehyde and the mixtures of these compounds, more particularly selected from the group consisting of 5-(hydroxymethyl)furfural, 2,5-di(hydroxymethyl)furan and the mixtures of these compounds.

8. Rubber composition according to any one of the preceding claims, comprising a diene elastomer selected from the group consisting of polybutadienes, synthetic polyisoprenes, natural rubber, butadiene copolymers, isoprene copolymers and the mixtures of these elastomers.

9. Rubber composition according to any one of the preceding claims, in the cured state.

10. Rubber composition, **characterized in that** it comprises:
A1) at least one aromatic compound comprising at least one aromatic nucleus bearing at least two functional groups, one of these functional groups being a hydroxymethyl functional group and the other being an aldehyde functional group or a hydroxymethyl functional group; and
A2) at least one phenolic compound chosen from:
- A21) at least one aromatic polyphenol comprising at least one aromatic nucleus bearing at least two hydroxyl functional groups in the meta position with respect to one another, the two positions ortho to at least one of the hydroxyl functional groups being unsubstituted;
- A22) at least one aromatic monophenol comprising at least one six-membered aromatic nucleus bearing a single hydroxyl functional group,
- the two positions ortho to the hydroxyl functional group being unsubstituted or
- at least one position ortho to and the position para to the hydroxyl functional group being unsubstituted;
- and their mixtures.

11. Rubber composition according to the preceding claim, in the raw state.

12. Process for the manufacture of a rubber composition in the raw state, **characterized in that** it comprises a stage of mixing:
- A1) at least one aromatic compound comprising at least one aromatic nucleus bearing at least two functional groups, one of these functional groups being a hydroxymethyl functional group and the other being an aldehyde functional group or a hydroxymethyl functional group; and
- A2) at least one phenolic compound chosen from:
- A21) at least one aromatic polyphenol comprising at least one aromatic nucleus bearing at least two hydroxyl functional groups in the meta position with respect to one another, the two positions ortho to at least one of the hydroxyl functional groups being unsubstituted;
- A22) at least one aromatic monophenol comprising at least one six-membered aromatic nucleus bearing a single hydroxyl functional group;
- the two positions ortho to the hydroxyl functional group being unsubstituted or
- at least one position ortho to and the position para to the hydroxyl functional group being unsubstituted;
- their mixtures; and
- at least one elastomer.

13. Process for the manufacture of a rubber composition in the cured state, **characterized in that** it comprises:
- a stage of manufacture of a rubber composition in the raw state comprising a stage of mixing:
- A1) at least one aromatic compound comprising at least one aromatic nucleus bearing at least two functional groups, one of these functional groups being a hydroxymethyl functional group and the other being an aldehyde functional group or a hydroxymethyl functional group; and
- A2) at least one phenolic compound chosen from:
- A21) at least one aromatic polyphenol comprising at least one aromatic nucleus bearing at least two hydroxyl functional groups in the meta position with respect to one another, the two positions ortho to at least one of the hydroxyl functional groups being unsubstituted;
- A22) at least one aromatic monophenol comprising at least one six-membered aromatic nucleus bearing a single hydroxyl functional group,
- the two positions ortho to the hydroxyl functional group being unsubstituted or
- at least one position ortho to and the position para to the hydroxyl functional group being unsubstituted ;
- and their mixtures,
- then, a stage of shaping the rubber composition in the raw state,
- then, a stage of crosslinking the rubber composition during which a resin based on the phenolic compound A2) and on the aromatic compound A1) is crosslinked.

14. Rubber composition, **characterized in that** it is capable of being obtained by a process according to Claim 13.

15. Tyre (1), **characterized in that** it comprises a rubber composition according to any one of Claims 1 to 11 or according to Claim 14
